# EUROPÄISCHE PATENTSCHRIFT

(11) **EP 2 708 410 B1**
(45) Veröffentlichungstag und Bekanntmachung des Hinweises auf die Patenterteilung: **18.01.2017**
(21) Anmeldenummer: 13184411.0
(22) Anmeldetag: 13.09.2013
(51) Int. Cl.: B60N 2/68, B60N 2/22

(54) **Sitz, insbesondere Fahrzeugsitz, mit hochangeordneter Schwenkachse**
Seat, in particular a vehicle seat, with high pivot axis
Siège, notamment siège de véhicule, doté d'un axe de pivotement disposé en hauteur

(30) Priorität: 14.09.2012 DE 102012108642
(43) Veröffentlichungstag der Anmeldung: 19.03.2014
(73) Patentinhaber: GRAMMER AG, 92224 Amberg (DE)
(72) Erfinder: Schulz, Christian, 38704 Liebenburg (DE)
(74) Vertreter: Hannke, Christian

(56) Entgegenhaltungen:
- EP-A1- 1 728 673
- EP-A2- 1 632 389
- DE-A1- 2 754 022
- DE-T5-112007 002 640
- FR-A5- 2 200 803
- US-A1- 2005 168 041

## Beschreibung

Die Erfindung betrifft einen Sitz, insbesondere einen Fahrzeugsitz, mit einem Sitzteil, welches eine Sitzfläche aufweist und gegenüber einer Bodenfläche im Bereich der Sitzvorderseite abgestützt ist, und mit einer Rückenlehne, die mit dem Sitzteil mittels einer Schwenkachse verschwenkbar verbunden ist, gemäß dem Oberbegriff des Patentanspruches 1.

Sitze, insbesondere Fahrzeugsitze, sind in vielfältiger Weise bekannt. Herkömmlicherweise weisen derartige Sitze, sofern die Rückenlehne gegenüber dem Sitzteil, auf dem die den Sitz benutzende Person sitzt, verschwenkt werden kann, eine Schwenkachse auf, die eine Schwenkung zwischen der Rückenlehne und dem Sitzteil ermöglicht. Hierbei ist die Rückenlehne mit einem unteren Ende schwenkbar an dem Sitzteil befestigt und kann gegenüber dem Sitzteil in Sitzvorwärts- und Sitzrückwärtsrichtung nach vorne oder nach hinten geschwenkt werden, um einen entsprechenden Sitzkomfort der den Sitz benutzenden Person zur Verfügung zu stellen.

Die Schwenkachse ist bei den bisherigen Sitzen, insbesondere bei den bisherigen Fahrzeugsitzen, üblicherweise am hinteren und unteren Bereich des Sitzteiles, welches beispielsweise einen Sitzteilrahmen aufweisen kann, angeordnet. Hierbei ist die Rückenlehne mit ihrem untersten Ende an der Schwenkachse befestigt bzw. daran angeordnet. Möglicherweise ist eine möglichst tiefe Anordnung dieser Schwenkachse an dem Sitzteil gewünscht, so dass ein fließender Übergang von der Sitzpolsteroberfläche bzw. Sitzoberfläche zu der Oberfläche des Rückenlehnenpolsters auch bei verschwenktem Zustand der Rückenlehne vorhanden ist. Dies bedeutet, dass derartige Schwenkachsen unterhalb der Sitzoberfläche bzw. der Sitzpolsteroberfläche angeordnet sind.

Ebenso bekannt sind Sitze, insbesondere Fahrzeugsitze, die Armlehnen aufweisen, welche üblicherweise links- und/oder rechtsseitig an der Rücklehne befestigt sind. Derartige Armlehnen können derart schwenkbar angeordnet sein, dass sie nach oben und nach unten geschwenkt werden können, um beispielsweise bei Bussitzen das seitliche Ein- und Aussteigen zu erleichtern. Diese Armlehnen sind demzufolge aufgrund einer gewünschten Mindesthöhe für diese Armlehne häufig an der Rückenlehne direkt befestigt.

Alternativ können derartige Armlehnen über ein winkelig ausgebildetes Verbindungselement am darunterliegenden Sitzteil befestigt sein, so dass ein erster Abschnitt des Verbindungselementes von dem Sitzteil an den Seiten des Fahrzeugsitzes nach oben verlaufend und ein zweiter Anteil des Verbindungselementes zur Vorderseite des Fahrzeugsitzes hin verlaufend vorhanden ist.

Derartige Sitze fordern die separate Anbringung von Armlehnen mittels weiterer Bauteile an den Seiten der Rückenlehne oder an den Seiten des Sitzteiles.

Häufig ergibt sich bei der Anbringung der Rückenlehne mit ihrem unteren Ende an dem hinteren Ende des Sitzteiles das Problem, dass besonders stabile Verbindungselemente im Bereich der Schwenkachse, die ebenso in diesem Bereich, also unterhalb der Sitzfläche angeordnet ist, notwendig sind. Hieraus ergeben sich - auch aufgrund der Materialauswahl - hohe Herstellungskosten.

Ebenso ist bisher die Anbringung einer Schwenkachse, welche die Verbindung zwischen einem unteren Ende der Rückenlehne und einem hinteren Ende des Sitzteiles darstellt, unterhalb des Sitzteiles, oder zumindest unterhalb der Sitzoberfläche, deshalb gewünscht, damit ein fließender Übergang an den Polsteroberflächen von dem Sitzteil zu dessen Rückenlehnenpolster vorliegt und somit ein hoher Sitzkomfort zur Verfügung gestellt wird, d.h. man war bisher immer bestrebt, die Schwenkachse, mit der die Rückenlehne an dem Sitzteil befestigt ist, möglichst nahe an der Rückseite oder der Unterseite des Sitzteiles anzuordnen. Weiterhin ist aus der EP1728673 A1 ein Sitz mit den Merkmalen des Oberbegriffs vom Anspruch 1 bekannt.

Demzufolge ist es Aufgabe der Erfindung, einen Sitz, insbesondere einen Fahrzeugsitz, zur Verfügung zu stellen, der ein Sitzteil, eine Rückenlehne und gegebenenfalls Armlehnen aufweist und einen einfachen, stabilen und kostengünstigen Aufbau unter Beibehaltung eines hohen Sitzkomforts wiedergibt.

Diese Aufgabe wird gemäß den Merkmalen des Patentanspruches 1 gelöst.

Ein wesentlicher Punkt der Erfindung liegt darin, dass bei einem Sitz, insbesondere einem Fahrzeugsitz, mit einem Sitzteil, welches eine Sitzfläche aufweist und gegenüber einer Bodenfläche im Bereich der Sitzvorderseite abgestützt ist, und mit einer Rückenlehne, die mit dem Sitzteil mittels einer Schwenkachse schwenkbar verbunden ist, und gegebenenfalls zusätzlich mindestens eine oder sogar zwei Armlehnen aufweist, die Schwenkachse oberhalb einer Sitzoberfläche des Sitzteiles in Sitzbreitenrichtung verlaufend angeordnet ist.

Ein weiterer wesentlicher Punkt der Erfindung ist die Anordnung der Schwenkachse so weit oberhalb der Sitzoberfläche, dass sich hieraus ein Längenverhältnis von einer ersten Länge, die sich von einem oberen Ende der Rückenlehne bis zu der Schwenkachse erstreckt, zu einer zweiten Länge, die sich von mindestens einem unteren Ende der Rückenlehne bis zu der Schwenkachse erstreckt, in einem Bereich von 1 : 1 bis 3 : 1, bevorzugt in einem Bereich von 1,8 : 1 bis 2,2 : 1 liegt. Hierbei ist die Rückenlehne derart ausgebildet, dass ihr unteres Ende sich bis oder nahezu bis zu der Bodenfläche erstreckt und somit gegenüber der Bodenfläche eine abstützende Wirkung hat.

Somit ergibt sich aus dem erfindungsgemäßen Sitz, insbesondere Fahrzeugsitz, eine Gesamtkonstruktion, die sich aus einer sich bis zu dem Bodenbereich bzw. der Bodenfläche erstreckenden Rückenlehne und einem Sitzteil, welches im rückwärtigen Bereich mit der Rückenlehne schwenkbar verbunden ist, zusammensetzt. Das Sitzteil kann somit über eine sehr hoch angeordnete Schwenkachse mit Bezug auf die Sitzoberfläche mit der Rückenlehne verbunden werden, wobei das untere Ende der Rückenlehne bei einer Schwenkbewegung ebenso eine nach vorne oder nach hinten gerichtete Schwenkbewegung durchführt. Die Anordnung einer derart hoch angeordneten Schwenkachse hat auch zur Folge, dass keine sehr stabilen Verbindungselemente zwischen der Rückenlehne und dem Sitzteil im Bereich der Schwenkachse notwendig sind, wie es bisher der Fall war. Denn bisher war die Rückenlehne lediglich mit ihrem unteren Ende über die Schwenkachse mit dem Sitzteil im rückwärtigen Bereich verbunden, so dass bei Belastung der Rückenlehne im Rückenbereich der den Sitz benutzenden Person hohe Kräfte auf die endseitig, also am unteren Ende angeordnete Schwenkachse, wirken. Demgegenüber ist die Schwenkachse jetzt wesentlich weiter oben gemäß der erfindungsgemäßen Ausgestaltung angeordnet und erlaubt das stabile und funktionell vorteilhafte Zusammenfügen der Rückenlehne mit dem Sitzteil ohne besondere zusätzliche stabile Verbindungselemente mit Ausnahme der Schwenkachse. Hierdurch wird auch der bei Fahrzeugen übliche und geforderte hohe Sicherheitsstandard gewährleistet.

Wenn also das untere Ende der Rückenlehne mindestens ein im rückwärtigen Bereich des Sitzes angeordnetes erstes Abstützfußelement zur Abstützung des Sitzes gegenüber der Bodenfläche darstellt und die Rückenlehne biegesteif in Höhenrichtung von einem oberen Ende bis zu einem unteren Ende durchgehend ausgebildet ist, kann das Sitzteil in seinem rückwärtigen Bereich mittels der Schwenkachse und der gegenüber der Bodenfläche abgestützten Rückenlehne und dem vorderseitigen Bereich mittels zweiten Abstützfußelementen gegenüber der Bodenfläche abgestützt werden. Hierfür weist das Sitzteil einen, gemäß der Erfindung einstückig ausgebildeten, Sitzteilrahmen mit jeweils einem links- und rechtsseitig, sich seitlich an der Rückenlehne bis in den Bereich der Schwenkachse nach oben erstreckenden Anteil auf, wobei vorteilhaft die Schwenkachse am Sitzteil fixiert ist.

Somit stellt die Rückenlehne ein oder mehrere hintere Abstützfußelemente und das Sitzteil ein oder mehrere vordere Abstützfußelemente zum Abstützen des Sitzes gegenüber der Bodenfläche, bei der es sich beispielsweise um eine Karosseriefläche handelt, zur Verfügung.

Vorteilhaft kann bei einer derartigen hohen Anordnung der Schwenkachse erreicht werden, dass zusätzlich die Armlehnen an dieser Schwenkachse aufgehängt bzw. schwenkend gelagert werden, so dass eine gemeinsame Schwenkachse für die Schwenkbewegung der Rückenlehne gegenüber dem Sitzteil und die Anordnung der Armlehnen verwendet werden kann. Dies ermöglicht eine starke Vereinfachung des Aufbaus des Gesamtsitzes. Die Armlehnen können sich hierbei vorzugsweise ausschließlich in Sitzvorwärtsrichtung von der Rückenlehne ausgehend von hinten nach vorne erstrecken, also keine winkelartige Ausbildung aufweisen. Hieraus ergibt sich ein Aufbau des Sitzes, insbesondere des Fahrzeugsitzes, der sich dadurch auszeichnet, dass die Schwenkachse für das Verschwenken der Rückenlehne gegenüber dem Sitzteil der bisher bekannten Sitze, insbesondere Fahrzeugsitze, relativ weit oben angeordnet ist, also auf Höhe der Armlehnen.

Die Schwenkachse ist demzufolge oberhalb einer Sitzoberfläche des Sitzteiles und dem rückwärtigen Teil des Sitzteiles in Sitzbreitenrichtung verlaufend angeordnet.

Somit hat erfindungsgemäß ein derartiger Sitz als einzige wirkliche Verbindung zwischen dem Sitzteil und der Rückenlehne die Schwenkachse, welche den Gesamtaufbau des Sitzes, insbesondere des Fahrzeugsitzes, erheblich vereinfacht. Damit ist die Rückenlehne nicht mehr als separates Bauteil an dem Sitzteil befestigt, sondern die Rückenlehne stellt einen eigenständigen Standfuß des Sitzes für den hinteren Bereich ebenso wie das Sitzteil für den vorderen Bereich dar.

Ein gutes Kräfte- und Krafthebelarmverhältnis der ober- und unterhalb der Schwenkachse liegenden Anteile der Rückenlehne, die direkt oder indirekt gegenüber der Bodenfläche, wie beispielsweise einer Karosseriebodenfläche, abgestützt ist, ergibt sich dadurch, dass das bereits beschriebene Längenverhältnis in den beschriebenen Bereichen liegt.

Als geeignetes Material für derartige erfindungsgemäße Fahrzeugsitze, die zusätzlich zu dem einfachen Gesamtaufbau auch leicht sein sollen, haben sich Kunststoffe, GFK-Faser verstärkte oder CFK-Faser verstärkte Materialien ergeben. Insbesondere kann es sich hierbei um Kunststoffe mit jeder Art von Faserverstärkung oder auch ohne Faserverstärkung handeln. Beispiele für weiter verwendbare Fasern sind Flachs, Aramidbasalt und dergleichen. Als Kunststoffe können Thermoplaste, Duroplaste oder weitere Kunststoffe verwendet werden. Davon ausgenommen sind Polsteranteile für das Sitzteil und die Rückenlehne, so dass vorzugsweise Sitzteilrahmen, Rückenlehnenrahmen und gegebenenfalls Armlehnenrahmen aus derartigen Materialien gebildet sind.

Gemäß einer bevorzugten Ausführungsform weist der erfindungsgemäße Sitz zusätzlich eine Kurvenbahneinrichtung zum Gleiten des ersten Abstützfußelementes, welches an der Rückenlehne angeordnet ist, entlang einer Kurvenbahn bei Durchführung einer Schwenkbewegung der Rückenlehne gegenüber dem Sitzteil in Sitzvorwärts- und Rückwärtsrichtung auf. Diese Kurvenbahneinrichtung ist also am unteren Ende der Rückenlehne angeordnet und mit der Bodenfläche bzw. Karosseriebodenfläche verbunden.

Zusätzlich kann eine derartige Kurvenbahneinrichtung eine Arretierungseinrichtung zum Arretieren des entlang der Kurvenbahn gleitenden ersten Abstützfußelementes gegenüber der Kurvenbahn aufweisen. Auf diese Weise kann die Rückenlehne in verschiedenen Schwenkstellungen mittels der Arretierungseinrichtung und der Kurvenbahneinrichtung fixiert werden. Da eine derartige Arretierungseinrichtung am unteren Ende der Rückenlehne angeordnet ist und somit einen relativ großen Abstand, also einen großen Krafthebelarm, zu der Schwenkachse, die relativ weit oben angeordnet ist, aufweist, ist es möglich, dass die Rückenlehne mit wenig Krafteinwirkung mittels der Arretierungseinrichtung fixiert wird. Dies bedeutet, dass gegenüber den herkömmlichen Fahrzeugsitzen, die eine große Kraftaufnahme im Schwenkachsenbereich und dem Arretierungsbereich, der im Bereich der Schwenkachse vorhanden ist, aufweisen, eine geringe Kraft-Drehmoment-Beaufschlagung im Bereich der Schwenkachse und auch im Bereich der Arretierungseinrichtung sowie der Kurvenbahneinrichtung vorhanden ist.

Vorteile und Zweckmäßigkeiten sind den Unteransprüchen ebenso wie der nachfolgenden Beschreibung in Verbindung mit der Zeichnung zu entnehmen. Hierbei zeigen:
- Fig. 1: in einer schematischen perspektivischen Darstellung einen Fahrzeugsitz gemäß einer Ausführungsform der Erfindung;
- Fig. 2a, 2b: in einer Seitendarstellung einen schematisch dargestellten Fahrzeugsitz gemäß der Ausführungsform der Erfindung mit einer verschwenkten und unverschwenkten Rückenlehne; und
- Fig. 3: in einer Seitendarstellung den erfindungsgemäßen Fahrzeugsitz mit eingezeichneten Krafthebelarmen.

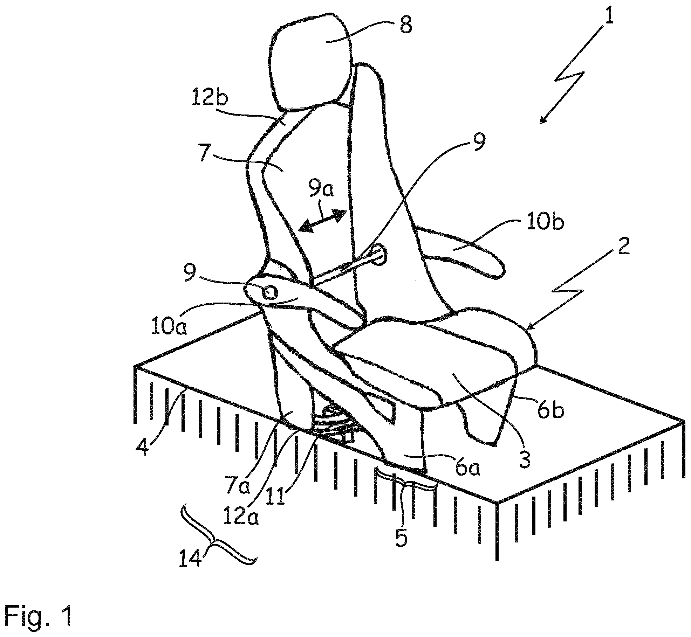

In Fig. 1 ist in einer perspektivischen schematischen Darstellung der Fahrzeugsitz gemäß einer Ausführungsform der Erfindung gezeigt. Der Fahrzeugsitz 1 weist hier kein Rückenlehnenpolster auf und ist mit einem Sitzteilpolster ausgestattet. Das Sitzteil 2 ist somit mit dem Sitzteilpolster 3 belegt.

Der Fahrzeugsitz ist auf einer Bodenfläche 4, die beispielsweise einen Karosserieboden eines Fahrzeuges darstellen kann, abgestellt.

In einem fahrzeugsitzvorderseitigen Bereich 5 ist das Sitzteil 2 gegenüber der Bodenfläche 4 abgestützt, und zwar mittels zweiten Abstützfußelementen 6a, 6b.

In einem fahrzeugrückseitigen Bereich 14 ist der Fahrzeugsitz mit ersten Abstützfußelementen 7a der Rückenlehne 7 gegenüber der Bodenfläche 4 abgestützt bzw. darauf abgestellt.

In einer Kurvenbahneinrichtung 11 kann die Rückenlehne 7 im Bereich ihrer ersten Abstützfußelemente 7a nach vorne und nach hinten verschwenkt werden, so dass eine Drehung um eine Schwenkachse 9 stattfindet und somit die Rückenlehne 7 in ihrem oberen Bereich nach hinten oder nach vorne verschwenkt wird.

Diese Kurvenbahneinrichtung 11 kann an dem links- und rechtsseitigen Abstützelement 7a der Rückenlehne 7 angebracht sein.

Die gemeinsame Schwenkachse 9 ist an dem Sitzteil 2 fixiert. An der Schwenkachse 9 ist die Rückenlehne 7 schwenkend derart aufgehängt, dass sich die Rückenlehne nach vorne und nach hinten bezüglich der Fahrzeugsitzlängsrichtung verschwenken lässt. Zusätzlich sind Armlehnen 10a und 10b links- und rechtsseitig an dieser Schwenkachse 9 angebracht und lassen sich ebenso nach oben und nach unten um die Schwenkachse 9 herum schwenken.

Die Schwenkachse 9 bildet somit die einzige wirkliche Verbindung zwischen der Rückenlehne 7 und dem Sitzteil 2, sowie den Armlehnen 10a und 10b. Die Schwenkachse 9 erstreckt sich in Sitzbreitenrichtung 9a.

Die Rückenlehne selbst erstreckt sich von einem oberen Ende 12b bis zu einem unteren Ende 12a, wobei das untere Ende 12a auf der Bodenfläche abgestellt oder beispielsweise mittels der Kurvenbahneinrichtung 11 gegenüber der Bodenfläche abgestützt ist.

Schließlich kann die Rückenlehne 7 oberseitig eine Kopfstütze 8 aufweisen.

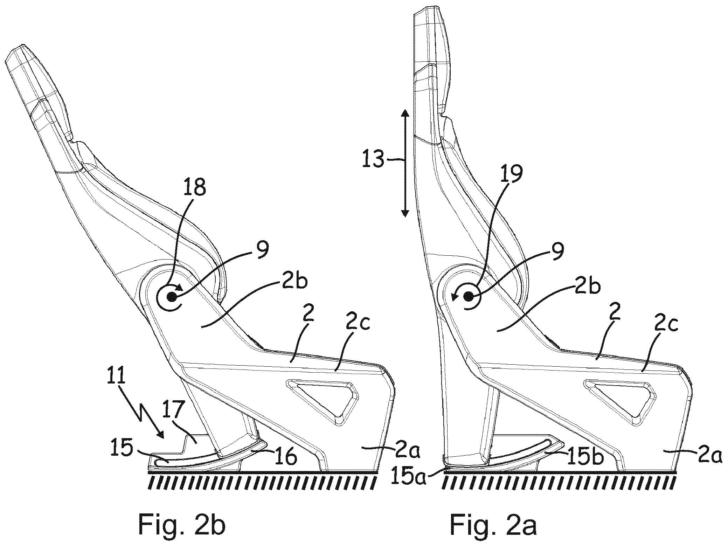

In Fig. 2a und 2b ist in zwei Seitendarstellungen der erfindungsgemäße Fahrzeugsitz in einer unverschwenkten und in einer verschwenkten Darstellung wiedergegeben. Der Fahrzeugsitz umfasst wiederum das Sitzteil 2, welches als Sitzteilrahmen vorhanden ist.

Dieser Sitzteilrahmen läuft oberseitig in links- und rechtsseitig angeordneten, nach oben verlaufenden Anteilen 2b aus, wobei diese Anteile 2b bis in den Bereich der Schwenkachse 9 verlaufen, also eine für das Anbringen von Armlehnen 10a und 10b übliche Höhe. Diese Anteile 2b bilden somit einen fixierten Halt für die Schwenkachse 9 und umfassen die Rückenlehne 7 links- und rechtsseitig.

Sobald eine Drehung der Rückenlehne 7 um die Schwenkachse 9 gemäß dem Pfeil 19 erfolgt, findet ein Verschwenken der Rückenlehne nach hinten, zumindest in ihrem oberen Teil statt, wie es in Fig. 2b wiedergegeben ist. Ein Zurückverschwenken findet gemäß dem Pfeil 18 statt.

Diesen beiden Darstellungen ist deutlich zu entnehmen, dass sich die Rückenlehne 7 in Höhenrichtung 13 durchgehend erstreckt, also bei einem Verschwenken der Rückenlehne um die Schwenkachse 9 in ihrem unteren Bereich bzw. an ihrem unteren Ende 12a nach vorne schwenkt, während sie in ihrem oberen Bereich nach hinten schwenkt.

Bei dem Schwenken nach vorne des unteren Endes 12a findet eine Führung des ersten Abstützfußelementes innerhalb der Kurvenbahn 15, 16 statt. Die Kurvenbahn 15 bildet eine kurvenförmige bzw. bogenförmige Ausnehmung bzw. Nut innerhalb des Bauteiles 17, welches fest mit der Bodenfläche 4 verbunden ist. Innerhalb dieser Nut 15 können beispielsweise eine oder mehrere Zapfen, die hier nicht näher dargestellt sind und die seitlich an dem Abstützfußelement 7a angeordnet sind, gleitend bewegt werden. Zugleich gleitet das untere Ende 12a der Rückenlehne 7 auf einer kurvenförmigen bzw. bogenförmigen Bahn 16, um die nötigen Gegenkräfte von Seiten der Bodenfläche 4 aus zu gewährleisten.

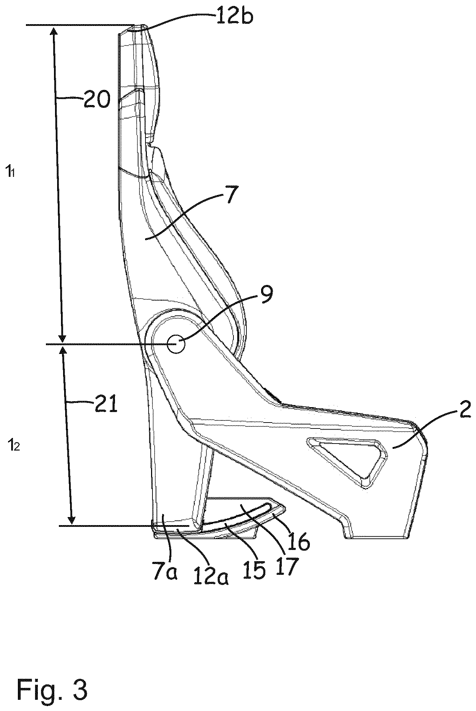

In Fig. 3 sind nochmals in einer Seitendarstellung die Hebelverhältnisse bzw. die Kraftverhältnisse in Bezug auf die Schwenkachse 9 des erfindungsgemäßen Fahrzeugsitzes wiedergegeben. Dieser Darstellung ist zu entnehmen, dass ein erster Krafthebelarm 20, der sich von der Schwenkachse 9 bis zu dem oberen Ende 12b der Rückenlehne erstreckt, in einem bestimmten Verhältnis zu einem zweiten Krafthebelarm 21, der sich von der Schwenkachse 9 bis zu dem unteren Ende 12a der Rückenlehne 7 erstreckt, besteht.

Idealerweise ist dieses Kraft-Hebelarm-Verhältnis derart ausgebildet, dass die Schwenkachse 9 und damit die Anteile 2b des Sitzteilrahmens sowie Durchgangsöffnungen an der Rückenlehne 7 auf einer Höhe angeordnet sind, die ein optimales Kraftverhältnis auch im unteren Bereich der Kurvenbahneinrichtung 11 zulässt, um mit möglichst wenig Kraft das untere Ende 12a der Rückenlehne 7 mittels einer hier nicht näher dargestellten Arretierungseinrichtung arretieren bzw. fixieren zu können.

Diese Fixierung besteht sich auf eine bestimmte Schwenkstellung der Rückenlehne 7.

Gemäß der Erfindung ist das Längenverhältnis von der ersten Länge 20, die sich von dem oberen Ende 12b der Rückenlehne 7 bis zu der Schwenkachse 9 erstreckt, zu der zweiten Länge 21, die sich von dem unteren Ende 12a der Rückenlehne 7 bis zu der Schwenkachse 9 erstreckt, in einem Bereich von 1 : 1 bis 3 : 1, bevorzugt in einem Bereich von 1,8 : 1 bis 2,2 : 1.

### Bezugszeichenliste

- 1: Fahrzeugsitz
- 2: Sitzteil
- 2b: Anteile
- 2c: Sitzoberfläche
- 3: Sitzteilpolster
- 4: Bodenfläche
- 5: fahrzeugsitzvorderseitiger Bereich
- 6a: zweites Abstützfußelement
- 6b: zweites Abstützfußelement
- 7: Rückenlehne
- 7a: Abstützfußelement
- 8: Kopfstütze
- 9: Schwenkachse
- 9a: Sitzbreitenrichtung
- 10a: Armlehne
- 10b: Armlehne
- 11: Kurvenbahneinrichtung
- 12a: unteres Ende/abgestütztes Ende
- 12b: oberes Ende
- 13: Höhenrichtung
- 14: fahrzeugrückseitiger Bereich/rückwärtiger Bereich
- 15: Kurvenbahn/Nut
- 16: Kurvenbahn/kurvenförmige bzw. bogenförmige Bahn
- 18: Pfeil/Schwenkbewegung
- 19: Pfeil/Schwenkbewegung
- 20: Krafthebelarm/erste Länge
- 21: zweite Länge

## Patentansprüche

1. Sitz, insbesondere Fahrzeugsitz, mit einem Sitzteil (2) umfassend einen Sitzteilrahmen (2, 2a, 2b), welches eine Sitzfläche (3) aufweist und gegenüber einer Bodenfläche (4) im Bereich der Sitzvorderseite (5) abgestützt ist, und mit einer Rückenlehne (7), die mit dem Sitzteil (2) mittels einer Schwenkachse (9) schwenkbar verbunden ist, wobei
die Schwenkachse (9) oberhalb einer Sitzoberfläche (2c) des Sitzteiles (2) in Sitzbreitenrichtung (9a) verlaufend angeordnet ist und der Sitzteilrahmen (2, 2a, 2b) bei einer Verschwenkung der Rückenlehne (7) eine konstante Lage bezüglich der Bodenfläche (4) aufweist,
wobei, der Sitzteilrahmen (2, 2a, 2b) gegenüber der Bodenfläche (4) mittels zweiten Abstützelementen (6a, 6b) abgestützt ist und einstückig ausgebildet ist, mit jeweils einem links- und rechtsseitig, sich seitlich der Rückenlehne (7) bis in den Bereich der Schwenkachse (9) nach oben erstreckenden Anteil (2b) aufweist, **dadurch gekennzeichnet, dass** ein Längenverhältnis von einer ersten Länge (20), die sich von einem oberen Ende (12b) der Rückenlehne (7) bis zu der Schwenkachse (9) erstreckt, zu einer zweiten Länge (21), die sich von mindestens einem unteren Ende (12a) der Rückenlehne (7) bis zu der Schwenkachse (9) erstreckt, in einem Bereich von 1 : 1 bis 3 : 1 liegt.

2. Sitz nach Anspruch 1,
**dadurch gekennzeichnet, dass**
das Längenverhältnis von der ersten Länge (20) zu der zweiten Länge (21) in einem Bereich von 1,8 : 1 bis 2,2 : 1 liegt.

3. Sitz nach Anspruch 1 oder 2,
**dadurch gekennzeichnet, dass**
das untere, gegenüber der Bodenfläche (4) abgestützte Ende (12a) der Rückenlehne (7), sich bis oder nahezu bis zur Bodenfläche (4) erstreckt.

4. Sitz nach Anspruch 3,
**dadurch gekennzeichnet, dass**
das untere Ende (12a) der Rückenlehne (7) mindestens ein im rückwärtigen Bereich (14) des Sitzes angeordnetes erstes Abstützfußelement (7a) zur Abstützung des Sitzes (1) gegenüber der Bodenfläche (4) darstellt.

5. Sitz nach Anspruch 3 oder 4,
**dadurch gekennzeichnet, dass**
die Rückenlehne (7) biegesteif und in Höhenrichtung (13) von einem oberen Ende (12b) bis zu dem unteren Ende (12a) durchgehend ausgebildet ist.

6. Sitz nach einem der vorangegangenen Ansprüche,
**dadurch gekennzeichnet, dass**
die Schwenkachse (9) am Sitzteil (2) fixiert ist.

7. Sitz nach einem der vorangegangenen Ansprüche,
**dadurch gekennzeichnet, dass**
das Sitzteil (2) in seinem rückwärtigen Bereich (14) mittels der Schwenkachse (9) und der gegenüber der Bodenfläche (4) abgestützten Rückenlehne (7) und dem vorderseitigen Bereich (5) mittels zweiten Abstützfußelementen (6a, 6b) gegenüber der Bodenfläche (4) abgestützt ist.

8. Sitz nach einem der vorangegangenen Ansprüche,
**dadurch gekennzeichnet, dass**
ein Sitzteilrahmen, und ein Rückenlehnenrahmen jeweils, vorzugsweise einstückig, aus Kunststoff mit oder ohne Faserverstärkung ausgebildet ist.

9. Sitz nach einem der Ansprüche 4 - 8,
**dadurch gekennzeichnet, dass**
das erste Abstützfußelement (7a) mit einer Kurvenbahneinrichtung (11) zum Gleiten des ersten Abstützfußelementes (7a) entlang einer Kurvenbahn (15, 16) bei Durchführung einer Schwenkbewegung (18, 19) der Rückenlehne (7) gegenüber dem Sitzteil (2) in Sitzvorwärts- und Rückwärtsrichtung verbunden ist.

10. Sitz nach Anspruch 9,
**dadurch gekennzeichnet, dass**
die Kurvenbahneinrichtung (11) eine Arretierungseinrichtung zum Arretieren des entlang der Kurvenbahn (15, 16) gleitenden ersten Abstützfußelementes (7a) gegenüber der Kurvenbahn (15, 16) aufweist.

## Claims

1. Seat, in particular a vehicle seat, comprising a seat part (2) having a seat-part frame (2, 2a, 2b) which has a seat surface (3) and is supported relative to a floor (4) in the region of the front side (5) of the seat, and comprising a backrest (7) which is pivotally connected to the seat part (2) by means of a pivot axis (9),
the pivot axis (9) being arranged so as to extend above an upper seat surface (2c) of the seat part (2) in the seat-width direction (9a) and the position of the seat-part frame (2, 2a, 2b) relative to the floor (4) being constant when the backrest (7) is pivoted,
the seat-part frame (2, 2a, 2b) being supported relative to the floor (4) by means of second support elements (6a, 6b), being formed in one piece and comprising a portion (2b) which extends upwards into the region of the pivot axis (9) at the sides of the backrest (7) on the left-hand side and the right-hand side, respectively, **characterised in that** a length ratio of a first length (20), which extends from an upper end (12b) of the backrest (7) as far as to the pivot axis (9), to a second length (21), which extends from at least a lower end (12a) of the backrest (7) as far as to the pivot axis (9), is in a range of from 1:1 to 3:1.

2. Seat according to claim 1,
**characterised in that** the length ratio of the first length (20) to the second length (21) is in a range of from 1.8:1 to 2.2:1.

3. Seat according to either claim 1 or claim 2,
**characterised in that**
the lower end (12a) of the backrest (7) that is supported relative to the floor (4) extends as far as to, or almost as far as to, the floor (4).

4. Seat according to claim 3,
**characterised in that**
the lower end (12a) of the backrest (7) forms at least one first support foot element (7a) arranged in the rear region (14) of the seat in order to support the seat (1) relative to the floor (4).

5. Seat according to either claim 3 or claim 4,
**characterised in that**
the backrest (7) is formed so as to be rigid and to be continuous in the height direction (13) from an upper end (12b) to the lower end (12a).

6. Seat according to any of the preceding claims,
**characterised in that**
the pivot axis (9) is fixed to the seat part (2).

7. Seat according to any of the preceding claims,
**characterised in that**
the seat part (2) is supported in its rear region (14) by means of the pivot axis (9) and the backrest (7), which is supported relative to the floor (4), and is supported in the front region (5) relative to the floor (4) by means of second support foot elements (6a, 6b).

8. Seat according to any of the preceding claims,
**characterised in that**
a seat-part frame and a backrest frame are each formed, preferably in one piece, of plastics material which either is or is not fibre-reinforced.

9. Seat according to any of claims 4 to 8,
**characterised in that**
the first support foot element (7a) is connected to a curved path device (11) for sliding the first support foot element (7a) along a curved path (15, 16) when carrying out a pivoting movement (18, 19) of the backrest (7) relative to the seat part (2) in the forward direction and backward direction of the seat.

10. Seat according to claim 9,
**characterised in that**
the curved path device (11) comprises a locking device for locking the first support foot element (7a), which slides along the curved path (15, 16), relative to the curved path (15, 16).

## Revendications

1. Siège, plus notamment siège de véhicule, avec une partie d'assise (2) comprenant un châssis partiel d'assise (2, 2a, 2b) qui comprend une surface d'assise (3) et est appuyée par rapport à une surface du plancher (4) au niveau du côté avant du siège (5), et avec un dossier (7), qui est relié de manière pivotante avec la partie d'assise (2) au moyen d'un axe de pivotement (9),
l'axe de pivotement (9) étant disposé de manière à s'étendre au-dessus d'une surface d'assise (2c) de la partie d'assise (2) dans la direction de la largeur du siège (9a) et le châssis partiel d'assise (2a, 2a, 2b) présentant, lors d'un pivotement du dossier (7), une position constante par rapport à la surface du plancher (4),
le châssis partiel d'assise (2, 2a, 2b) étant appuyé par rapport à la surface du plancher (4) au moyen de deux éléments d'appui (6a, 6b) et étant conçu d'une seule pièce, avec une partie (2b), côté gauche et côté droit, s'étendant vers le haut sur le côté du dossier (7) jusqu'au niveau de l'axe de pivotement (9),
**caractérisé en ce que**
un rapport de longueur entre une première longueur (20), qui s'étend d'une extrémité supérieure (12b) du dossier (7) jusqu'à l'axe de pivotement (9), et une deuxième longueur (21), qui s'étend d'au moins une extrémité inférieure (12a) du dossier (7) jusqu'à l'axe de pivotement (9), est de l'ordre de 1:1 à 3:1.

2. Siège selon la revendication 1,
**caractérisé en ce que**
le rapport de longueur entre la première longueur (20) et la deuxième longueur (21) est de l'ordre de 1,8:1 à 2,2:1.

3. Siège selon la revendication 1 ou 2,
**caractérisé en ce que**
l'extrémité inférieure (12a), appuyée par rapport à la surface du plancher (4), du dossier (7), s'étend jusqu'à ou presque jusqu'à la surface du plancher (4).

4. Siège selon la revendication 3,
**caractérisé en ce que** l'extrémité inférieure (12a) du dossier (7) constitue au moins un premier élément de pied d'appui (7a) disposé dans la partie arrière (14) du siège pour le soutien du siège (1) par rapport à la surface du plancher (4).

5. Siège selon la revendication 3 ou 4,
**caractérisé en ce que**
le dossier (7) est conçu de manière rigide et de manière continue dans le sens de la hauteur (13) d'une extrémité supérieure (12b) à une extrémité inférieure (12a).

6. Siège selon l'une des revendications précédentes,
**caractérisé en ce que**
l'axe de pivotement (9) est fixé sur la partie d'assise (2).

7. Siège selon l'une des revendications précédentes,
**caractérisé en ce que**
la partie d'assise (2) est appuyé, dans sa partie arrière (14), au moyen de l'axe de pivotement (9) du dossier (7) appuyé par rapport à la surface du plancher (4) et dans sa partie avant (5) au moyen de deuxièmes éléments de pieds d'appui (6a, 6b) par rapport à la surface du plancher (4).

8. Siège selon l'une des revendications précédentes,
**caractérisé en ce que**
un châssis partiel d'assise et un châssis de dossier sont réalisés de préférence d'une seule pièce en matière plastique avec ou sans renforcement par des fibres.

9. Siège selon l'une des revendications 4 à 8,
**caractérisé en ce que**
le premier élément de pied d'appui (7a) est relié avec un dispositif à piste courbe (11) pour le glissement du premier élément de pied d'appui (7a) le long d'une piste courbe (15, 16) lors de la réalisation d'un mouvement de pivotement (18, 19) du dossier (7) par rapport à la partie d'assise (2) vers l'avant et vers l'arrière du siège.

10. Siège selon la revendication 9,
**caractérisé en ce que**
le dispositif à piste courbe (11) comprend un dispositif de blocage pour le blocage du premier élément de pied d'appui (7a) glissant le long de la piste courbe (15, 16) par rapport à la piste courbe (15, 16).
